# EUROPÄISCHE PATENTSCHRIFT

(11) **EP 0 571 424 B1**
(45) Veröffentlichungstag und Bekanntmachung des Hinweises auf die Patenterteilung: **15.05.1996**
(21) Anmeldenummer: 92903990.7
(22) Anmeldetag: 05.02.1992
(51) Int. Cl.: H04J 3/16

(54) **VERFAHREN ZUM EMPFANG UND ZUR ABGABE VON RAHMENKÖPFEN VON UND FÜR STM-1-SIGNALE IN EINEM RAHMENKOPF-SERVER EINES NETZKNOTENS**
PROCESS FOR THE RECEPTION AND ISSUE OF SECTION OVERHEADS OF AND FOR STM-1 SIGNALS IN A SECTION OVERHEAD SERVER OF A NETWORK NODE
PROCEDE DE RECEPTION ET D'EMISSION DE BINAIRES AUXILIAIRES DE SIGNAUX STM-1 DANS DES SERVEURS DE BINAIRES AUXILIAIRES DE NOEUDS DE RESEAU

(30) Priorität: 12.02.1991 DE 4104238
(43) Veröffentlichungstag der Anmeldung: 01.12.1993
(73) Patentinhaber: SIEMENS AKTIENGESELLSCHAFT, D-80333 München (DE)
(72) Erfinder: MÜLLER, Horst, D-8021 Hohenschäftlarn (DE)
(86) Internationale Anmeldenummer: DE9200072
(87) Internationale Veröffentlichungsnummer: WO9214315

(56) Entgegenhaltungen:
- EP-A- 0 407 851
- LU-A- 87 713
- BRITISH TELECOMMUNICATIONS ENGINEERING. Bd. 9, 1. August 1990, LONDON, GB, Seiten 60-63; E.M. KÜGLER: "Network Node NK2000 - A controllable multiplexing and distribution facility for transmission networks"

## Beschreibung

Digitale Übertragungssysteme enthalten von einem Netzmanagementsystem gesteuerte Netzknoten mit Schnittstellen für Digitalsignale der Plesiochron-Digitalhierarchie PDH und für STM-1-Signale der Synchron-Digitalhierarchie SDH.

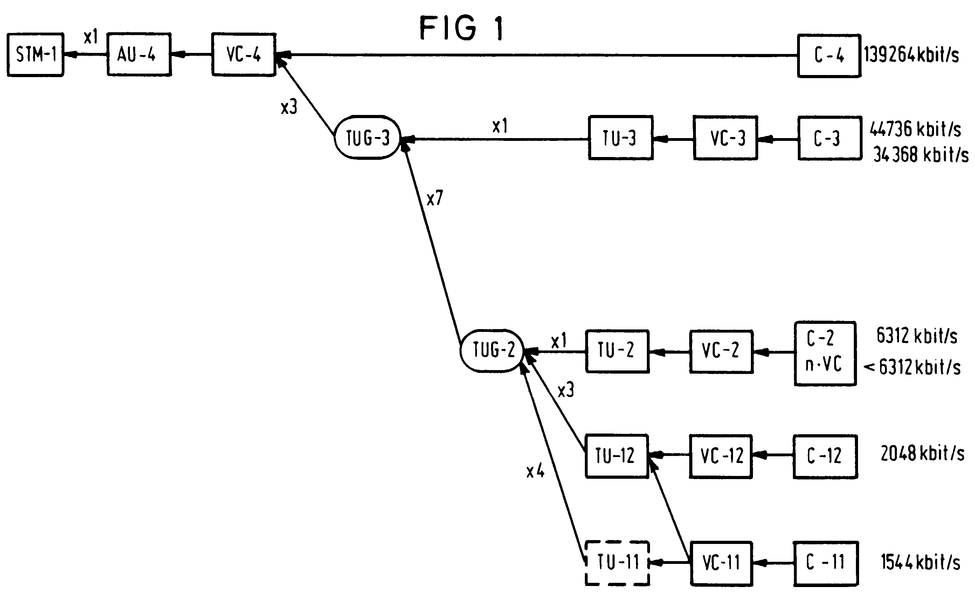

Figur 1 zeigt eine Multiplexstruktur des European Telecommunications Standards Institute ETSI, Empfehlung ETS DE/TM-301, Version 1.2 vom 30.06.1990. In dieser Struktur bedeutet AU Verwaltungseinheit (Administrative Unit), C Container, STM synchrones Transportmodul, TU Untersystemeinheit (Tributary Unit), TUG Untersystemeinheitengruppe (Tributary Unit Group) und VC Virtualcontainer. Die Ziffern an den Leitungen geben an, wie oft eine gleichartige Einheit pro zu bildendem Transportmodul STM-1 übertragen wird. Die Pfeile geben die Übertragungsrichtung beim Multiplexen an; beim Demultiplexen ist der Signalfluß umgekehrt. Die Untersystemeinheit TU-11 ist gestrichelt dargestellt, weil sie aus einer Multiplexstruktur nach Figur 1.1 der CCITT-Empfehlung G.709 vom 6. 6.1990 stammt.

In der Siemens-Druckschrift "Netzknoten NK2000", herausgegeben vom Geschäftsgebiet Übertragungssysteme, Postfach 70 00 71, D-W-8000 München 70, Bestell-Nr. 542022-D4200-A1-3-29 ist ein Netzknoten beschrieben. Dieser enthält einen Netzknotenrechner NCU und verschiedene mit diesem und untereinander durch Busse verbundene Schalteinrichtungen.

Eine Schalteinrichtung CCM64K ist eine Cross-Connect-Multiplex-Einrichtung mit einem Koppelfeld zum blockierungsfreien Rangieren von 64-kbit/s-Signalen und mit Schnittstellen für 2-Mbit/s-Signale.

Eine Schalteinrichtung CCM2 ist eine Cross-Connect-Multiplex-Einrichtung, die ein mehrstufiges, synchrones Koppelfeld enthält. Sie ermöglicht das blockierungsfreie Rangieren in verschiedenen Schaltebenen der Sychron-Digitalhierarchie SDH. Dies sind für 2-Mbit/s-Signale die Schaltebene TU-12 und für 34- sowie 45-Mbit/s-Signale die Schaltebene TU-3.

Eine Schalteinrichtung CC155 ist eine Cross-Connect-Einrichtung mit einem synchronen Koppelfeld zum blockierungsfreien Rangieren von 140-Mbit/s-Signalen und STM-l-Signalen einer Bitrate von 155 Mbit/s in der Schaltebene AU-4.

Ein Netzknotenkonzept DBPT der Firmen ANT Nachrichtentechnik GmbH und Standard Elektrik Lorenz AG beinhaltet eine der Schalteinrichtung CCM2 entsprechende Schalteinrichtung mit einem vom Netzknotenrechner gesteuerten OH-Server, der die Rahmenköpfe aller ankommenden STM-l-Signale empfängt und entsprechende Rahmenköpfe für die abzugebenden STM-l-Signale erzeugt.

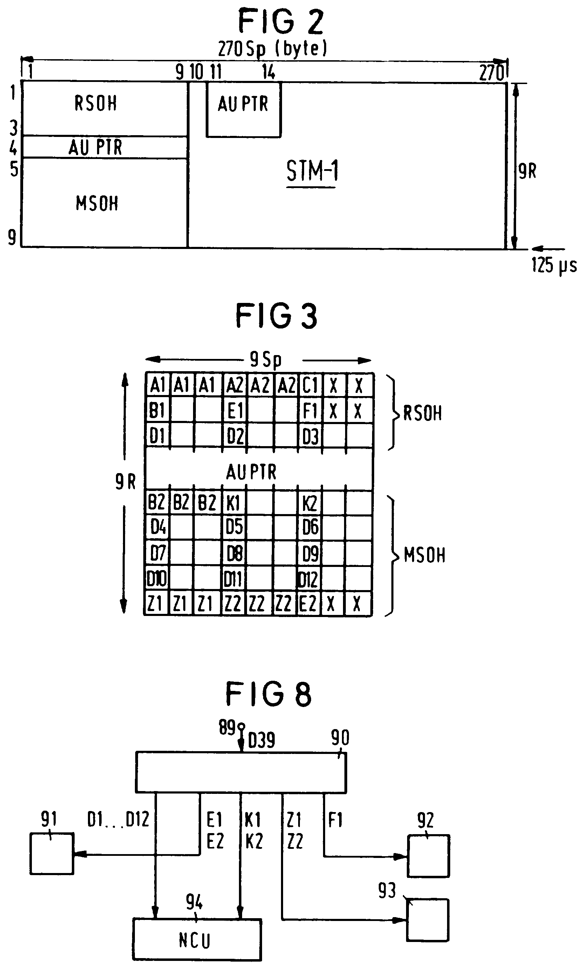

Figur 2 zeigt den Rahmen eines synchronen Transportmoduls STM-1 mit 270 Spalten SP bzw. Bytes und 9 Reihen R. Diese Form wurde gewählt, um den 9 * 270 Sp langen Rahmen auf einem DIN-A4-Blatt darstellen zu können. Der Rahmen enthält für systeminterne Zwecke einen Regenerator-Rahmenkopf (Regenerator Section Overhead) RSOH, einen Multiplexer-Rahmenkopf (Multiplexer Section Overhead) MSOH und Verwaltungseinheitszeiger (Administrative Unit Pointer) AU PTR.

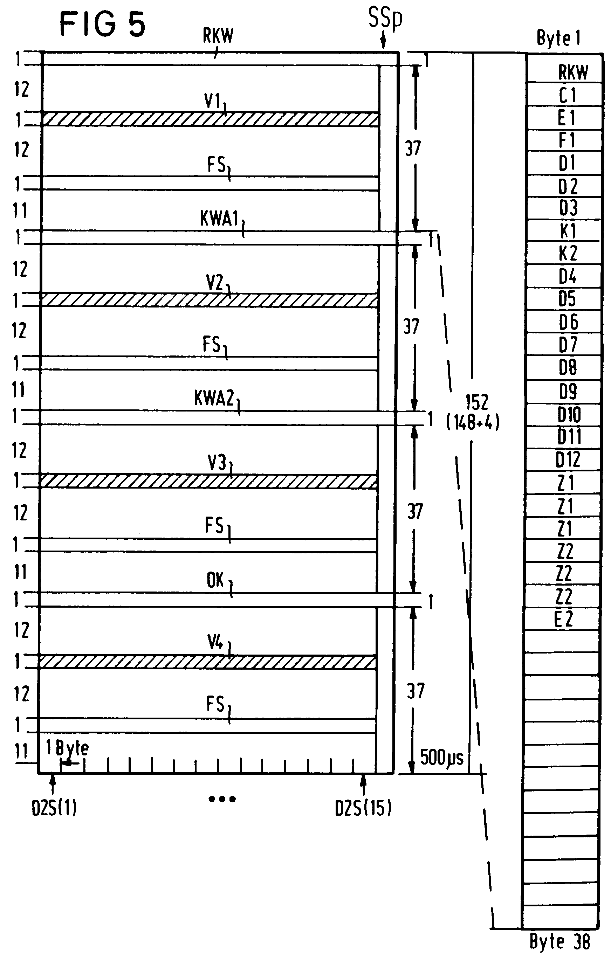

Figur 3 zeigt den Rahmenkopf des STM-l-Rahmens nach Figur 2 mit einer Byte-Belegung entsprechend der Figur 5.2 der CCITT-Empfehlung G.708 vom Juni 1990. Die Zusatzbytes des Rahmenkopfes RSOH bzw. MSOH dienen beispielsweise der Synchronisierung auf den Rahmenbeginn (A1, A2), der Ermittlung der Bitfehlerhäufigkeit des Regeneratorabschnitts (B1) sowie des Multiplexabschnitts (B2), der Ident izierung des STM-l-Signals (C1), der Übertragung von Steuerinformationen (D1-D12), als Dienstfernsprechkanal (E1, E2), der automatischen Ersatzschaltung (K1, K2) oder der Reserve (Z1, Z2). Das Fl-Byte steht dem Benutzer zur Verfügung. Diese Zusatzbytes verteilen sich auf sieben Spalten Sp des Rahmens.

Aus der Europäischen Patentanmeldung EP 0 407 851 A2 ist ein Verfahren zum Durchschalten von Multiplexsignalen über eine Cross-Connect-Einrichtung bekannt, bei dem in Datenblöcke eingeordnete Daten der Plesiochron- oder Synchron-Digitalhierarchie verschiedener Multiplexebenen in einheitliche Cross-Connect- Datenblöcke umgesetzt werden. Diese weisen eine Bitrate von 38,912 Mbit/s auf, sind in Rahmen mit 152 Reihen und 16 Spalten untergebracht und werden als D39-Signale bezeichnet. Deren schaltungstechnische Realisierung beschreibt die LU-A-87 713.

Nach Figur 1 können über die Untersystemeinheiten TU-12 bis zu dreiundsechzig 1,5- oder 2-Mbit/s-Signale, drei 34- oder 45-Mbit/s-Signale bzw. ein 140-Mbit/s-Signal in ein STM-l-Signal gemultiplext werden. Ein solches wird im Empfangsteil einer Anschlußeinheit der Schalteinrichtung CCM2 in vier D39-Signale aufgeteilt und nach einer Zeitkoppelstufe, bei der die in einem D39-Signal enthaltenen bis zu sechzehn TU-12-bzw. D2/S-Signale beliebig zeitlich verteilt werden können, dem Raumkoppelfeld zugeführt. Für dieses muß die Anzahl der D39-Signale zwischen dem Zeit- und Raumkoppelfeld verdoppelt werden, d.h. in der Schalteinrichtung CCM2 müssen acht D39-Signale vorgesehen werden. Da in den vier D39-Signalen vierundsechzig TU-12-Signale übertragen werden könnten, ist eine Spalte nicht belegt.

Bei Verwendung der Untersystemeinheit TU-11 nach Figur 1 zeigt die Multiplexstruktur, daß - für die US-Hierarchieanstelle von dreiundsechzig 1,5-Mbit/s-Signalen vierundachzig solche gemultiplext werden. Hierfür werden nach der Verdoppelung zwölf D39-Signale benötigt.

Werden geschlossene 34-, 45- oder 140-Mbit/s-Signale über das Raumkoppelfeld geführt, entfällt für diese die Zeitkoppelfunktion und damit die Verdoppelung der D39-Signale, so daß in diesen Fällen mehr freie Kapazität für die Übertragung der Zusatzbytes zur Verfügung steht.

Die Verarbeitung eines vollständigen Rahmenkopfes RSOH und MSOH erfordert einen erheblichen Aufwand, der bei einer Cross-Connect-Einrichtung CCM2 für jedes STM-l-Signal durchzuführen ist.

Der im Anspruch angegebenen Erfindung liegt das Problem zugrunde, die Verarbeitung dieses Rahmenkopfes zu vereinfachen.

Die mit der Erfindung erzielten Vorteile bestehen darin, daß im Raumkoppelfeld mit D39-Signalen niedrigerer Bitrate gearbeitet werden kann und daß der Rahmenkopf-Server pro STM-l-Signal statt sieben Rahmenspalten nur eine auswerten oder erzeugen muß.

Die Bytes A1, A2, B1 und B2 des Rahmenkopfes RSOH und MSOH werden unmittelbar in STM-l-Anschlußeinheiten verarbeitet, da diese Funktionen dem STM-l-Signal zugeordnet sind und im Echtzeitbetrieb verarbeitet werden müssen.

Ein Ausführungsbeispiel der Erfindung ist in der Zeichnung dargestellt und wird im folgenden näher beschrieben.

Es zeigen
- Fig. 1: ein Multiplexkonzept,
- Fig. 2: ein synchrones Transportmodul STM-l,
- Fig. 3: einen Rahmenkopf RSOH und MSOH,
- Fig. 4: eine Schalteinrichtung CCM2,
- Fig. 5: einen D39-Rahmen,
- Fig. 6: einen erfindungsgemäßen Empfangsteil einer STM-l-Anschlußeinheit
- Fig. 7: einen erfindungsgemäßen Sendeteil einer STM-l-Anschlußeinheit und
- Fig. 8: einen erfindungsgemäßen Rahmenkopf-Server.

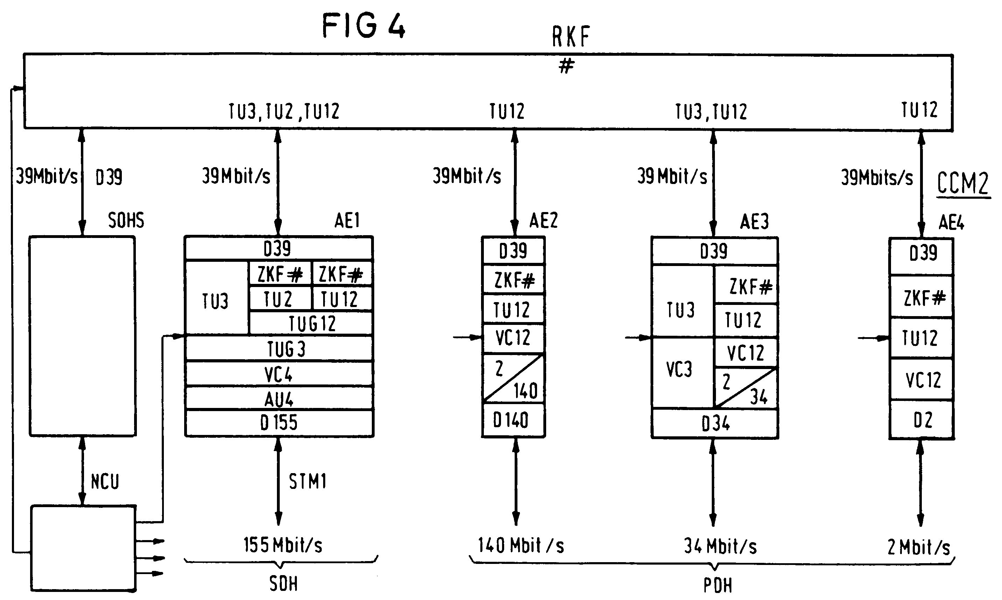

Figur 4 zeigt eine Schalteinrichtung CCM2 mit einem Raumkoppelfeld RKF, mit einer STM-l-Anschlußeinheit AE1, mit einer 140-Mbit/s- Anschlußeinheit AE2, mit einer 34-Mbit/s-Anschlußeinheit AE3, mit einer 2-Mbit/s-Anschlußeinheit AE4, mit einem Rahmenkopf-Server SOHS und mit einem Netzknotenrechner NCU, der mit allen anderen Einheiten in Verbindung steht. Die Bitraten sind auf- oder abgerundet.

In den Anschlußeinheiten AE1 bis AE4 sind die notwendigen Verfahrensschritte gemäß Figur 1 dargestellt. D bedeutet Digitalsignal und ZKF Zeitkoppelfeld. In letzterem können die Nutzsignale im Rahmen zeitlich sortiert werden. Blöcke mit einem Schrägstrich sind Multiplexer bzw. Demultiplexer.

Die Anschlußeinheiten AE2 bis AE4 haben für die Erfindung keine Bedeutung und werden nicht weiter erläutert. In der STM-l-Anschlußeinheit AE1 können die Verfahrensschritte prinzipiell in beiden Richtungen ablaufen. Dabei gibt es drei Varianten wie auch die Multiplexstruktur in Figur 1 zeigt.

Die Figur 5 zeigt links den bekannten Rahmen eines D39-Signals, bei dem in den Spalten 1 bis 15 jeweils ein D2S-Signal übertragen wird, das eine Untersystemeinheit TU-12 enthält. Mit FS sind Stopfbytes, mit KWA1 und KWA2 Koppelwegadressen, mit QK Qualitätskriterien, mit RKW ein Rahmenkennungswort und mit V1 bis V4 Pfadrahmenköpfe bezeichnet.

Ein STM-l-Signal wird auf vier D39-Rahmen verteilt. Dabei werden nach der Multiplexstruktur in Figur 1 dreiundsechzig Spalten benötigt. Die im vierten D39-Signal übrigbleibende vierundsechzigste Spalte nimmt als Sonderspalte SSp die Bytes C1, D1 bis D12, E1 bis E2, F1, K1, K2, Z1 und Z2 des Rahmenkopfes RSOH und MSOH auf.

Dies zeigt Figur 5, in der die sechzehnte Spalte kein D2S-Signal aufgenommen hat und im obersten Viertel diese Bytes enthält, die vergrößert nach rechts herausgezogen sind.

Zu jedem empfangenen STM-l-Signal gehört eine derartige Sonderspalte, von denen im Raumkoppelfeld RKF jeweils sechzehn zu einem D39-Signal verschachtelt werden, die dem Rahmenkopf-Server SOHS zugeführt und vom Rechner NCU ausgewertet werden. Für abgehende STM-l-Signale werden in dem Rahmenkopf-Server SOHS, vom Rechner NCU gesteuert, Sonderspalten zusammengestellt und jeweils sechzehnfach in einem D39-Signal zum Raumkoppelfeld RKF ausgesendet.

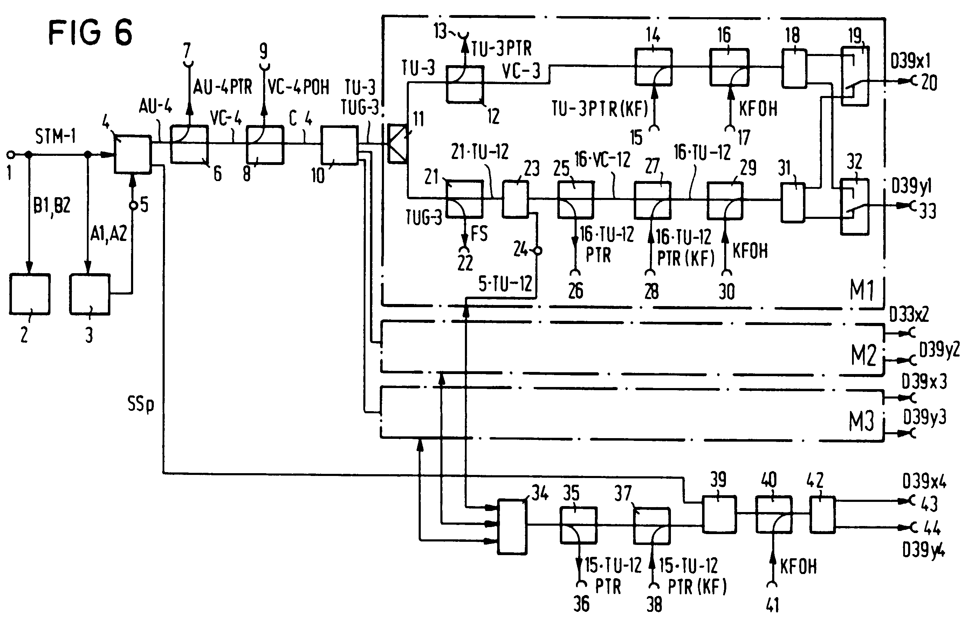

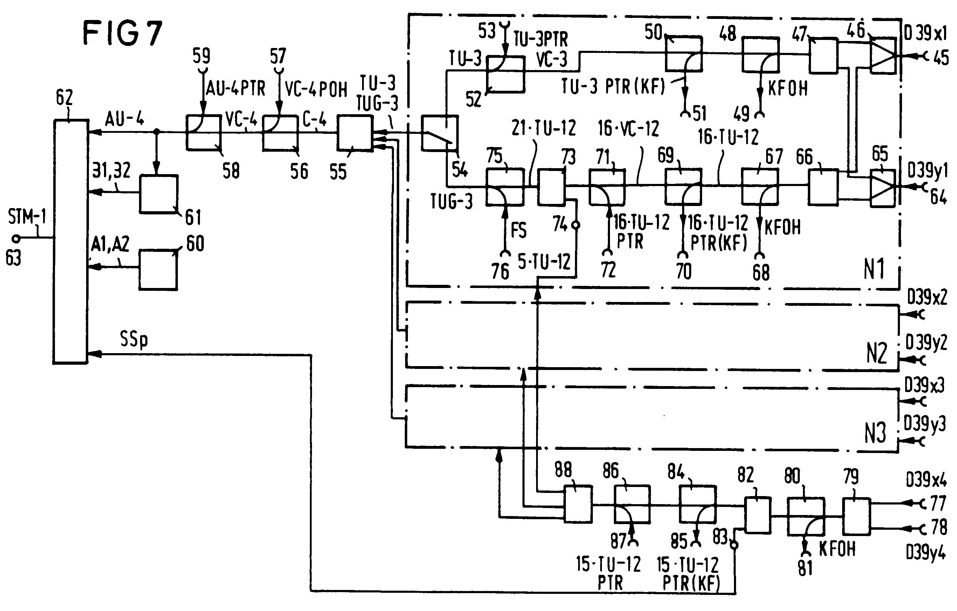

Die Figur 6 zeigt einen Empfangsteil und die Figur 7 einen Sendeteil einer Anschlußeinheit AE1, in der in der Multiplexstruktur nach Fig. 1 einerseits der Weg von STM-1 über TUG-3 nach TU-3 und andererseits der Weg von STM-1 über TUG-3 und TUG-2 nach TU-12 und umgekehrt verarbeitet wird. Eine Anordnung für den Weg nach TU-11 unterscheidet sich davon lediglich durch einen Faktor in der Übertragung.

Die Anordnung nach Figur 6 enthält einen Fehlerratenauswerter 2, eine Synchronisiereinrichtung 3, einen Demultiplexer 4, einen AU-4-PTR-Auskoppler und -Auswerter 6, einen VC-4-POH-Auskoppler und -Auswerter 8, einen Container-Demultiplexer 10 mit Synchronisiereinrichtung, einen Parallelverzweiger 11, einen TU-3-PTR- Auskoppler und -Auswerter 12, einen TU-3-PTR (KF)-Einkoppler 14, eine KFOH-Einfügeeinrichtung 16, einen Demultiplexer 18, einen Signalumschalter 19, einen Feste-Stopfbytes-Auskoppler 21, einen Demultiplexer 23, einen 16(TU-12 PTR)-Auskoppler und -Auswerter 25, eine 16(TU-12 PTR(KF))-Einkoppel- una -Synchronisiereinrichtung 27, eine KFOH-Einfügeeinrichtung 29, einen Demultiplexer 31, einen Signalumschalter 32, einen Multiplexer 34, einen 15(TU-12PTR)-Auskoppler und Auswerter 35, eine 15(TU-12 PTR(KF))-Einkoppel- und Synchronisiereinrichtung 37, einen Multiplexer 39, eine KFOH-Einfügeeinrichtung 40 und einen Demultiplexer 42.

Die Baugruppe M1 vom Parallelverzweiger 11 bis zu dem D39x1-Signalausgang 20 und dem D39y1-Signalsausgang 33 ist noch zweimal als Baugruppen M2 und M3 an den Container-Demultiplexer 10 angeschlossen vorhanden. Die für jede Taktanpassung erforderlichen Pufferspeicher sind hier und in der folgenden Figur der Übersichtlichkeit halber nicht dargestellt.

An den Eingang 1 wird ein STM-l-Signal angelegt. Die Bytes B1 und B2 aus dem Multiplexer-Rahmenkopf MSOH werden dem Fehlerratenauswerter 2 zugeführt. Die Bytes A1 und A2 aus dem Regenerator-Rahmenkopf RSOH werden von der Synchronisiereinrichtung 3 empfangen. Im Demultiplexer 4 wird die Verwaltungseinheit AU-4 vom Regenerator- und Multiplexer-Rahmenkopf RSOH und MSOH getrennt. Vom AU-4-PTR-Auskoppler und -Auswerter 6 wird der AU-4-PTR-Zeiger über einen Ausgang 7 ausgekoppelt und ausgewertet. Der verbleibende VC-4-Virtualcontainer gelangt zum VC-4-POH-Auskoppler und -Auswerter 8, der den VC-4-POH-Pfadrahmenkopf auswertet und über seinen Ausgang 9 abgibt. Die Information über den Containeranfang und den Überrahmenstatus wird den folgenden Schaltungen 10, 12, 21, 23, 25, 27, 29 und 31 mitgeteilt. Der C-4- Container gelangt zum Container-Demultiplexer 10 mit Synchronisiereinrichtung. In diesem wird er in drei TU-3-Untersystemeinheiten, drei TUG-3-Untersystemeinheitengruppen oder eine Mischung aus beiden aufgespalten. Den drei Parallelverzweigern 11 in den Baugruppen M1 bis M3 wird jeweils entweder eine TU-3-Untersystemeinheit oder eine TUG-3-Untersystemeinheitengruppe zugeführt.

In dem TU-3-PTR-Auskoppler und -Auswerter 12 im ersten Weg und in dem Feste-Stopfbytes-Auskoppler 21 im zweiten Weg wird untersucht, ob ein TU-3-PTR-Zeiger oder ob feste Stopfbytes FS vorhanden sind. Ist ein TU-3-PTR-Zeiger vorhanden, wird dieser ausgewertet und über einen Ausgang 13 abgegeben. Die Information über den Containeranfang und den Überrahmenstatus wird den folgenden Schaltungen 14 und 16 mitgeteilt. Sind feste Stopfbytes FS vorhanden, werden diese über einen Ausgang 22 abgegeben.

Am Ausgang des TU-3-PTR-Auskopplers und -Auswerters 12 steht gegebenenfalls ein VC-3-Virtualcontainer mit seinem Quellentakt zur Verfügung. Dieser VC-3-Virtualcontainer wird in dem TU-3-PTR(KF)-Einkoppler 14 (KF=Koppelfeld) auf den örtlichen vom Netzknotentakt abgeleiteten Koppelfeldtakt unter Einfügung eines TU-3-PTR(KF)-Zeigers über einen Eingang 15 zur Taktanpassung aufsynchronisiert und in der KFOH-Einfügeeinrichtung 16 mit der Koppelfeld-Zusatzinformation KFOH an einem Eingang 17 in einen Koppelfeld-Überrahmen eingefügt. Im Demultiplexer 18 wird das D39-Signal zeitschlitzweise in ein D39x1-und ein D39y1-Signal aufgeteilt, um eine Blockierung im Raumkoppelfeld RKF zu verhindern. Ist der D39x1-Signalausgang 20 und der D39y1-Signalausgang 33 über die Signalumschalter 19 und 32 mit dem Demultiplexer 18 verbunden, stehen diese Signale zur Verfügung, und werden dem Raumkoppelfeld RKF in Figur 4 zugeführt.

Würden jedoch in dem Feste-Stopfbytes-Auskoppler 21 feste Stopfbytes erkannt, träte an dessen Hauptausgang eine TUG-3-Untersystemeinheitsgruppe auf, die aus einundzwanzig TU-12-Untersystemeinheiten bestünde. In dem Demultiplexer 23 würden fünf TU-12- Untersystemeinheiten zu einem Ausgang 24 abgezweigt und sechzehn weitergegeben. In dem 16(TU-12PTR)-Auskoppler und -Auswerter 25 würden sechzehn TU-12-PTR-Zeiger ausgewertet und über einen Ausgang 26 entfernt. Vom 16 (TU-12 PTR)-Auskoppler und -Auswerter 25 gelangen sechzehn VC-12-Virtualcontainer zur 16(TU-12PTR(KF))- Einkoppel- und -Synchronisiereinrichtung 27. Dort würden sie unter Einfügung vom 16(TU-12 PTR(KF))-Zeigern auf den örtlichen Koppelfeldtakt aufsynchronisiert und in der KFOH-Einfügeeinrichtung 29 unter Zuführung der Koppelfeld-Zusatzinformation KFOH über einen Eingang 30 in den Koppelfeld-Überrahmen eingebettet. Der Demultiplexer 31 würde jetzt wie der Demultiplexer 18 arbeiten. Jetzt müßten die Signalumschalter 19 und 31 den Demultiplexer 31 mit dem D39x1-Signalausgang 20 und dem D39y1-Signalausgang 33 verbinden.

Die Koppelfeld-Zusatzinformation-Einfügeeinrichtung 29 enthält zweckmäßigerweise auch eine "Router"-Funktion (Zeitkoppelfeld ZKF), mit der die zeitlichen Reihenfolge der sechzehn VC-12- Virtualcontainer variiert werden kann.

Von den Ausgängen 24 der Demultiplexer 23 der Baugruppen M1 bis M3 gelangen dreimal fünf TU-12-Untersystemeinheiten zum Multiplexer 34. Den verschachtelten fünfzehn TU-12-Untersystemeinheiten werden im 15(TU-12PTR)-Auskoppler und -Auswerter 35 über einen Ausgang 36 fünfzehn TU-12-PTR-Zeiger entnommen. In der 15(TU-12PTR(KF))-Einkoppel- und -Synchronisiereinrichtung 37 werden über einen Eingang 38 fünfzehn TU-12-PTR(KF)-Zeiger zugefügt. Das Ausgangssignal wird im Multiplexer 39 mit der aus dem Demultiplexer 4 hervorgegangenen Sonderspalte SSp verschachtelt. Dem Demultiplexerausgangssignal wird in der KFOH-Einfügeeinrichtung 40 über einen Eingang 41 eine Koppelfeld-Zusatzinformation KFOH hinzugefügt. Im Demultiplexer 42 wird das entstandene D39-Signal wie in den Demultiplexern 18 und 31 auf ein D39x4-Signal an einem Ausgang 43 und ein D39y4-Signal an einem Ausgang 44 aufgeteilt.

Werden in allen drei Baugruppen M1 bis M3 geschlossene TU-3-Untersystemeinheiten verarbeitet, dann enthält das D39x4-und das D39y4-Signal insgesamt lediglich die Sonderspalte SSp, da in den D39x1 bis D39x3- bzw. in den D39y1- bis D39y3-Signalen ausreichend Platz vorhanden ist.

Die Anordnung nach Figur 7 enthält einen Parallelverzweiger 46, einen Multiplexer 47, einen KFOH-Auskoppeleinrichtung 48, einen TU-3-PTR(KF)-Auskoppler und -Auswerter 50, einen TU-3-PTR-Einkoppler 52, einen Signalumschalter 54, einen Container-Multiplexer 55, einen VC-4-POH-Einkoppler 56, einen AU-4-PTR-Einkoppler 58, einen A1- und A2-Synchronisiersignalerzeuger 60, einen B1- und B2-Berechner 61, einen Multiplexer 62, ein Parallelverzweiger 65, einen Multiplexer 66, eine KFOH-Auskoppeleinrichtung 67, einen 16(TU-12 PTR(KF))-Auskoppler und -Auswerter 69, einen 16(TU-12 PTR)-Einkoppler 71, einen Feste-Stopfbytes-Einkoppler 75, einen Multiplexer 79, eine KFOH-Auskoppeleinrichtung 80, einen Demultiplexer 82, einen 15(TU-12PTR(KF))-Auskoppler und -Auswerter 84, einen 15(TU-12PTR)-Einkoppler 86 und einen Demultiplexer 88.

Das Multiplexverfahren läuft in umgekehrter Reihenfolge ab wie das Demultiplexverfahren nach Figur 6. Zuerst wird das D39x1- und das D39y1-Signal über die Parallelverzweiger 46 und 65 den Multiplexern 47 und 66 zugeführt. In der KFOH-Auskoppeleinrichtung 48 wird dann die Koppelfeld-Zusatzinformation KFOH ausgekoppelt, ausgewertet und über einen Ausgang 49 abgegeben. In dem TU-3-PTR(KF)-Auskoppler und -Auswerter 50 wird der TU-3-PTR(KF)-Zeiger ausgewertet und über einen Ausgang 51 abgegeben. Dem verbleibenden VC-3-Virtualcontainer wird im TU-3-PTR-Einkoppler 52 über den Eingang 53 ein TU-3-PTR-Zeiger hinzugefügt. Hierbei ist jedoch keine Taktanpassung durch Stopfen erforderlich, da alle D39-Signale vor dem Raumkoppelfeld RKF bereits auf den Netzknotentakt synchronisiert wurden.

In der KFOH-Auskoppeleinrichtung 67 wird die Koppelfeld-Zusatzinformation KFOH ausgewertet und über einen Ausgang 68 abgegeben. Die verbleibenden sechzehn TU-12-Untersystemeinheiten gelangen zum 16(TU-12PTR(KF))-Auskoppler und -Auswerter 69, wo die sechzehn TU-12-PTR(KF)-Zeiger ausgewertet und über einen Ausgang 70 abgezweigt werden. Auch hier ist keine Taktanpassung durch Stopfen erforderlich, da alle D39-Signale bereits vor dem Raumkoppelfeld RKF auf den Netzknotentakt synchronisiert wurden.

Den verbleibenden sechzehn VC-12-Virtualcontainern werden in dem 16(TU-12 PTR)-Einkoppler 71 über einen Eingang 72 sechzehn TU-12-PTR-Zeiger zugeführt. Im Multiplexer 73 werden über einen Eingang 74 weitere fünf TU-12-Untersystemeinheiten verschachtelt. In die abgegebene TUG-3-Untersystemeinheitsgruppe werden in dem Feste-Stopfbytes-Einkoppler 75 über einen Eingang 76 feste Stopfbytes FS hinzugefügt.

Die Stellung des Signalumschalters 54 richtet sich nach dem Signalinhalt des D39-Signals oder wird von einem Netzwerk-Management bestimmt. Im Container-Multiplexer 55 erfolgt ein byteweises Verschachteln von drei TU-3-Untersystemeinheiten und/oder TUG-3-Untersystemeinheitengruppen. Im VC-4-POH-Einkoppler 56 wird dem C-4-Container über einen Eingang 57 ein VC-4-POH-Pfadrahmenkopf zugefügt. Dem so gebildeten VC-4-Virtualcontainer wird im AU-4-PTR-Einkoppler 58 über einen Eingang 59 ein AU-4-PTR-Zeiger zugeordnet, so daß am Ausgang des AU-4- PTR-Einkopplers 58 eine AU-4-Verwaltungseinheit abgegeben werden kann. Im Multiplexer 62 werden noch die Bytes A1 und A2 aus dem A1-und A2-Synchronisiersignalerzeuger 60 und die Bytes B1 und B2 aus dem B1- und B2-Berechner 61 hinzugefügt, so daß ein STM-l-Signal an einem Ausgang 63 abgegeben werden kann.

Auch hier können "Routing"-Funktionen eingeführt werden.

Das D39x4- und das D39y4-Signal werden im Multiplexer 79 verschachtelt. In der KFOH-Auskoppeleinrichtung 80 wird über einen Eingang 81 die Koppelfeld-Zusatzinformation KFOH entnommen. In dem Demultiplexer 82 wird die Sonderspalte SSp abgetrennt und über einen Ausgang 83 abgegeben. In dem 15(TU-12 PTR(KF))-Auskoppler und -Auswerter 84 werden fünfzehn TU-12-PTR(KF)-Zeiger entnommen. Im 15(TU-12 PTR)-Einkoppler 86 werden fünfzehn TU-12-PTR- Zeiger hinzugefügt. Im Demultiplexer 88 werden die fünfzehn TU-12-Untersystemeinheiten auf die Eingänge 74 der Multiplexer 73 der drei Baugruppen N1 bis N3 verteilt.

Figur 8 zeigt einen Empfangsteil für ein D39-Signal in einem Rahmenkopf-Server SOHS. Die Anordnung enthält einen Demultiplexer 90, ein Diensttelefon 91, einen Benutzerkanal 92, einen Reservekanal 93 und einen Netzknotenrechner 94.

Im Demultiplexer 90 wird über den Eingang 89 ein D39-Signal mit sechzehn Sonderspalten zugeführt, deren Bytes nacheinander verteilt werden. Dem Netzknotenrechner 94 werden die Bytes D1 bis D12, K1 und K2, dem Diensttelefon 91 die Bytes E1 und E2, dem Benutzerkanal 92 das Byte F1 und dem Reservekanal 93 die Bytes Z1 und Z 2 zugeführt. In einem Sendeteil des Rahmenkopf-Servers SOHS laufen diese Verfahrensschritte umgekehrt ab.

## Patentansprüche

1. Verfahren zum Empfang von Rahmenköpfen (SOH) aus allen ankommenden STM-l-Signalen und zur Abgabe von Rahmenköpfen (SOH) an alle abgehenden STM-l-Signale in einer Schalteinrichtung (CCM2) mit einem an ein Raumkoppelfeld (RKF) mit STM-l-Anschlußeinheiten (AE1) sowie an einen Rechner (NCU) angeschlossenen Rahmenkopf-Server (SOHS) in einem Netzknoten (NK2000) eines digitalen Nachrichtenübertragungssystems,
**dadurch gekennzeichnet,**
daß im Empfangsteil jeder STM-l-Anschlußeinheit (AE1) ein STM-l-Signal in vier D39-Signale mit je einem aus 152 Zeilen und 16 Spalten bestehenden Byte-Rahmen umgesetzt wird,
daß in eine unbelegte Spalte (SSp) des Rahmens eines dieser D39-Signale die für spezielle Zwecke belegten Bytes (C1, D1D12, E1, E2, F1, K1, K2, Z1, Z2) der Rahmenköpfe (SOH) mit Ausnahme der Rahmensynchronisationsbytes (A1, A2) und der Bytes (B1, B2) für die Ermittlung der Bitfehlerhäufigkeit aus dem Rahmenkopf (RSOH, MSOH) eingefügt werden,
daß dem Rahmenkopf-Server (SOHS) über das Raumkoppelfeld (RKF) pro ankommendes STM-l-Signal nur die Bytes dieser einen Spalte (SSp) zugeführt werden,
daß im Rahmenkopf-Server (SOHS) ferner für eines der vier D39-Signale jedes abgehenden STM-l-Signals eine Spalte (SSp) für einen D39-Rahmen mit den belegten Bytes (C1, D1-D12, E1, E2, F1, K1, K2, Z1, Z2) der Rahmenköpfe (SOH) mit Ausnahme der Rahmensynchronisationsbytes (A1, A2) und der Bytes (B1, B2) für die Ermittlung der Bitfehlerhäufigkeit erzeugt wird,
daß diese Spalte (SSp) über das Raumkoppelfeld (RKF) in eine unbelegte Spalte eines der vier dem Sendeteil der STM-l-Anschlußeinheit (AE1) zugeführten D39-Signale eingefügt wird und daß die vier D39-Signale in ein abgehendes STM-l-Signal umgesetzt werden.

## Claims

1. A process for receiving section overheads (SOH) from all incoming STM-1 signals and for outputing section overheads (SOH) to all outgoing STM-1 signals in a switching device (CCM2) comprising a section overhead server (SOHS), connected to a space-division switching network (RKF) with STM-1 interface units (AE1) and to a processor (NCU), in a network node (NK2000) of a digital information transmission system, wherein in the receiving section of each STM-1 interface unit (AE1), an STM-1 signal is converted into four D39 signals having in each case one byte frame consisting of 152 rows and 16 columns, in that the bytes occupied for special purposes (C1, D1-D12, E1, E2, F1, K1, K2, Z1, Z2) of the section overheads (SOH), with the exception of the frame synchronization bytes (A1, A2) and the bytes (B1, B2) for determining the bit error rate from the section overhead (RSOH, MSOH) are inserted into an unoccupied column (SSp) of the frame of one of these D39 signals, in that only the bytes of this one column (SSp) are supplied to the section overhead server (SOHS) via the space-division switching network (RKF) for each incoming STM-1 signal, in that, furthermore, a column (SSp) for a D39 frame with the occupied bytes (C1, D1-D12, E1, E2, F1, K1, K2, Z1, Z2) of the section overheads (SOH), with the exception of the frame synchronization bytes (A1, A2) and the bytes (B1, B2) for determining the bit error rate, is generated for one of the four D39 signals of each outgoing STM-1 signal in the section overhead server (SOHS), in that this column (SSp) is inserted into an unoccupied column of one of the four D39 signals supplied to the transmitting section of the STM-1 interface unit (AE1) via the space-division switching network (RKF), and in that the four D39 signals are converted into an outgoing STM-1 signal.

## Revendications

1. Procédé de réception d'en-têtes (SOH) de trames parmi tous les signaux STM-1 arrivant et de fourniture d'en-têtes (SOH) de trames à tous les signaux STM-1 de départ dans un dispositif (CCM2) de commutation comportant un serveur (SOHS) d'en-têtes de trames connecté à un réseau (RKF) de connexion spatial comportant des unités (AE1) de raccordement STM-1 ainsi qu'à un ordinateur (NCU), dans un noeud (NK2000) de réseau d'un système numérique de transmission d'informations,
caractérisé en ce que
on convertit dans la partie de réception de chaque unité (AE1) de raccordement STM-1 un signal STM-1 en quatre signaux D39 comportant chacun une trame d'octets constituée de 152 lignes et de 16 colonnes,
on insère dans une colonne (SSp) inoccupée de la trame d'un de ces signaux D39 les octets (C1, D1-D12, E1, E2, F1, K1, K2, Z1, Z2), occupés à des fins spécifiques, des en-têtes (SOH) de trames, à l'exception des octets (A1, A2) de synchronisation de trames et des octets (B1, B2) pour la détermination de la fréquence d'apparition d'erreurs de bits à partir de l'en-tête (RSOH, MSOH) de trames,
on n'envoie au serveur (SOHS) d'en-tête de trames que les octets de cette colonne (SSp) pour chaque signal STM-1 arrivant par l'intermédiaire du réseau (RKF) de connexion spatial,
on produit en outre dans le serveur (SOHS) d'en-têtes de trames pour l'un des quatre signaux D39 de chaque signal STM-1 de départ une colonne (SSp) pour une trame D39 comportant les octets occupés (C1, D1-D12, E1, E2, F1, K1, K2, Z1, Z2) des en-têtes (SOH) de trames, à l'exception des octets (A1, A2) de synchronisation de trames et des octets (B1, B2) pour la détermination de la fréquence d'apparition d'erreurs de bits,
on insère cette colonne (SSp), par l'intermédiaire du réseau (RKF) de connexion spatial, dans une colonne inoccupée de l'un des quatre signaux D39 envoyés à la partie d'émission de l'unité (AE1) de raccordement STM-1 et on convertit les quatre signaux D39 en un signal STM-1 de départ.
